# EUROPÄISCHE PATENTANMELDUNG

(11) **EP 1 645 320 A1**
(43) Veröffentlichungstag der Anmeldung: **12.04.2006**
(21) Anmeldenummer: 04104938.8
(22) Anmeldetag: 08.10.2004
(51) Int. Cl.: B01D 45/14, B04B 5/12, F01M 13/04

(54) **Zentrifugalabscheider**

(71) Anmelder: MANN+HUMMEL GmbH, 71638 Ludwigsburg (DE)
(72) Erfinder: Hilpert, Torsten, 71729 Erdmannhausen (DE); Trautmann, Pius, Dr., 70499 Stuttgart (DE); Zink, Alexander, 73061 Ebersbach (DE)

(57) **Zusammenfassung**

Die Erfindung betrifft einen Zentrifugalabscheider (10) zur Abscheidung von in einem Luftstrom mitgeführten Öl- und/oder Feststoffpartikeln, insbesondere zur Entölung von Kurbelgehäusegasen einer Brennkraftmaschine, wobei der Zentrifugalabscheider als Tellerseparator (10) ausgeführt ist, mit einem Gemischeinlass (18) für die Öl- und/oder Feststoffpartikel behaftete Luft, einem Luftauslass (31) für Reinluft und einem Ölauslass (19) für Öl und/oder Feststoffpartikel, mit einem als Gehäuse ausgebildeten Stator, in dem ein Rotor (14) angeordnet ist, der mehrere Teller (24,25) aufweist, die entlang der Rotorachse parallel zueinander und koaxial zur Rotorachse angeordnet sind, wobei der Rotor (14) korrespondierend mit einem Antrieb verbunden ist. Dabei ist über dem obersten Teller ein Korb (21) mit dem Rotor (14) drehfest verbunden, wobei der Korb einen tellerförmigen Teil (22), welcher koaxial zur Rotorachse und im wesentlichen parallel zu den Tellern angeordnet ist und einen im wesentlichen zylinderförmigen Teil (23), welcher sich in Richtung der weiteren Teller erstreckt und im wesentlichen parallel zum Stator verläuft, aufweist.

## Beschreibung

Die Erfindung betrifft einen Zentrifugalabscheider zur Abscheidung von in einem Luftstrom mitgeführten Öl- und/oder Feststoffpartikeln nach dem Oberbegriff des Patentanspruches 1. Außerdem betrifft die Erfindung ein Verfahren zur Reinigung eines Fluidstromes durch einen Zentrifugalabscheider nach dem Oberbegriff des nebengeordneten Patentanspruches 12.

Ein derartiger Zentrifugalabscheider ist beispielsweise aus der DE 100 44 615 A1 bekannt und weist einen Zentrifugalölabscheider auf, der als Tellerseparator ausgeführt ist, welcher einen Gemischeinlass für ein ÖI/Luftgemisch und einen Luftauslass für Reinluft sowie einen Ölauslass für Öl aufweist. Das Gehäuse, welches den Stator darstellt, nimmt koaxial einen Rotor auf, welcher mehrere Teller aufweist, die entlang der Rotorachse parallel zueinander und koaxial zur Rotorachse angeordnet sind. Jeweils zwischen zwei benachbarten Tellern ist ein Spalt ausgebildet, der einen im Inneren des Rotors ausgebildeten Ringraum mit einem Raum verbindet, der im Inneren des Gehäuses den Rotor umgibt. Zwischen jeweils benachbarten Tellern sind Distanzelemente angeordnet, die für einen gleichbleibenden Abstand der Teller zueinander sorgen.

Aufgabe der Erfindung ist es nun, einen Zentrifugalölabscheider zu schaffen, welcher einfach in der Herstellung ist, eine besonders hochwertige Ölabscheidung ermöglicht und welcher eine möglichst gleichmäßige Strömungsverteilung aufweist. Eine weitere Aufgabe ist es, ein Verfahren zur Reinigung eines Fluidstromes durch einen Zentrifugalabscheider anzugeben.

Diese Aufgabe wird erfindungsgemäß durch einen Zentrifugalabscheider nach dem Oberbegriff des Patentanspruches 1 und dem Oberbegriff des nebengeordneten Patentanspruches 12 gelöst.

Die Erfindung beruht auf dem allgemeinen Gedanken, den Zentrifugalölabscheider als Tellerseparator auszubilden und diesen erfindungsgemäß zu verbessern. Es hat sich gezeigt, dass sich mithilfe des Tellerseparators eine hochwertige Ölabscheidung erzielt werden kann, so dass die aus dem Tellerseparator austretende Reinluft nur noch geringe Öl- und/oder Feststoffpartikelanteile enthält. Hierbei weist der Tellerseparator einen Gemischeinlass für die Öl- und/oder Feststoffpartikel behaftete Luft, einen Luftauslass für 5 die Reinluft und einen Ölauslass für die Öl- und/oder Feststoffpartikel auf. Hierbei ist in einem als Gehäuse ausgebildeten Stator ein Rotor angeordnet, welcher mehrere Teller aufweist, die entlang der Rotorachse parallel zueinander koaxial zur Rotorachse angeordnet sind, und dieser Rotor ist korrespondierend mit einem Antrieb verbunden. Erfindungsgemäß ist über dem obersten Teller ein Korb mit dem Rotor drehfest verbunden, wobei der Korb einen tellerförmigen Teil, welcher koaxial zur Rotorachse angeordnet ist, und einen im wesentlichen zylinderförmigen Teil, welcher sich in Richtung der weiteren Teller erstreckt und im wesentlichen parallel zum Stator verläuft, aufweist. Versuche haben hierbei ergeben, dass der mitrotierende Korb eine deutliche Vergleichmäßigung der Strömungsverteilung über die Tellerstapelhöhe ergibt. Herkömmliche Systeme ohne Korb haben den Nachteil, dass der Volumenstrom pro Tellerspalt mit steigender Tellerzahl in Richtung des Luftauslasses stark ansteigt, wodurch die Öl- und/oder Feststoffpartikel teilweise durch ihre stark erhöhte Geschwindigkeit nicht an den Tellern abgeschieden werden, sondern durch den Luftauslass ausgetragen werden. Eine Ursache für die Ungleichverteilung der Strömung sind Wirbelsysteme im Scherfeld zwischen rotierendem Tellerstapel und bei Standard-Tellerseparatoren stehender Gehäusewand. Ein weiterer Vorteil des Korbes ist, dass dieser auch als Vorabscheider für die im Gasstrom enthaltenen Öl- und/oder Feststoffpartikel dient, so dass sich insgesamt eine deutliche Verbesserung der Abscheideleistung ergibt. Durch die Auswahl der Telleranzahl, der Spaltlänge und der Spaltbreite kann für einen vorgegebenen Volumenstrom und einen vorgegebenen Druckverlust die gewünschte Reinigungswirkung erzielt werden. Es ist klar, dass die Reinigungswirkung außerdem von der Drehzahl des Rotors abhängt.

Vorzugsweise überdeckt der Korb wenigstens einen Teller, wobei der tellerförmige Teil des Korbes einen größeren Umfang als den Umfang des Tellers hat und der zylinderförmige Teil des Korbes sich in axialer Richtung wenigstens über einen Teller erstreckt. Diese Ausführung wirkt der Verwirbelung und damit der ungleichmäßigen Verteilung der Strömung besonders gut entgegen und verhindert so ein Ausbilden von Taylorwirbeln im Scherfeld zwischen den rotierenden Tellerstapeln und der stehenden Gehäusewand.

Gemäß einer zweckmäßigen Weiterbildung der Erfindung erstreckt sich der Korb über sämtliche Teller, welche drehfest am Rotor befestigt sind und bildet so einen Raum aus, weicher außen vom inneren Umfang des zylinderförmigen Teils des Korbes begrenzt ist und somit die Teller umgibt. Da Teller und Korb drehfest mit dem Rotor verbunden sind, erfährt das einströmende Fluid durch die Rotation von Tellern und Korb eine gleichmäßige Rotationsbewegung.

In vorteilhafter Weise ist jeweils zwischen zwei benachbarten Tellern ein Spalt ausgebil-det, der einen im Inneren des Rotors ausgebildeten Ringraum, welcher zwischen den Tellern im Bereich der Rotorwelle gebildet ist, mit dem Raum verbindet, der im Inneren des Gehäuses den Rotor umgibt und vom Korb umschlossen wird. Die Teller weisen hierzu in der Nähe der Rotorwelle Durchgangsöffnungen auf, welche in ihrer Kombination und Gesamtheit mit den Abständen zwischen den Tellern diesen Ringraum ausbilden. Durch die Ausbildung des Ringraumes und die Verbindung mit dem Raum außerhalb der Teller und innerhalb des Korbes durch den Tellerspalt wird der Strömungsverlauf für das durchströmende Fluid festgelegt.

Gemäß einer zweckmäßigen Weiterbildung können die Teller einen Tellerblock bilden, bei dem benachbarte Teller aneinander befestigt sind, wobei dieser Tellerblock über sei-ne axialen Enden mit der zentralen Rotorwelle des Rotors drehfest verbunden ist. Weiterhin sind in Richtung der Rotorachse zwischen den benachbarten Tellern Distanzelemente angeordnet, die für eine Konstanz der jeweiligen Spalte sorgen. Zum Aufbau des Tellerblocks können somit Teller und Distanzelemente aufeinandergestapelt werden und in einem Arbeitsgang miteinander verbunden werden, beispielsweise durch ein Schweiß-verfahren. In dieser Ausführungsform bildet der Tellerblock eine einteilige Baugruppe, die als solche an der Rotorwelle befestigt wird. Dementsprechend sind zumindest die Teller, die zwischen den axial äußeren Tellern angeordnet sind, nicht direkt mit der Rotorwelle verbunden. Die Anbindung des Tellerblocks an die Rotorwelle erfolgt dann über die beiden axial außenliegenden Teller. Durch diese Bauweise lässt sich die Herstellung des Tellerseparators vereinfachen, da mit der Befestigung des Tellerblocks an der Rotorwelle sämtliche Teller rotorfest montiert sind. Weiterhin ist es vorteilhaft, in den Tellern - wie oben beschrieben - im Bereich ihrer Verbindungsstelle mit der Rotorwelle Durchgangsöffnungen anzuordnen, wobei jedoch der unterste Teller, welcher zuerst von dem einströmenden Fluid angeströmt wird, sowie der tellerförmige Teil des Korbes in sich ge) schlossen sind und keine Durchgangsöffnung aufweisen. Auf diese Weise zwingt man das einströmende Fluid zunächst in den Raum zwischen Korb und Tellern einzuströmen, um dann durch die Tellerspalte in den Ringraum zu strömen. Dies ist notwendig, da die Abscheidung der Öl- und/oder Feststoffpartikel an den Tellern oder am Korb erfolgt.

Gemäß einer weiteren Ausgestaltung der Erfindung ist der tellerförmige Anteil des Korbes mit der Rotorwelle dichtend verbunden, so dass das strömende Fluid dort keine Möglichkeit hat, außerhalb des Korbes zu gelangen. Hierbei ist die Rotorwelle im oberen Bereich als Hohlwelle ausgeführt, wobei der hohle Bereich unterhalb des tellerförmigen Anteils des Korbes beginnt. Die Hohlwelle weist zwischen dem letzten Teller und dem tellerförmigen Anteil des Korbes Öffnungen auf, die den im Inneren des Rotors ausgebildeten Ringraum mit dem Hohlraum in der Rotorwelle verbindet. Weiterhin ist der Hohlraum der Rotorwelle mit dem Luftauslass verbunden. Auf diese Art und Weise kann das gereinigte Fluid nach Passieren des letzten Tellers durch die Öffnungen in den Hohlraum der Rotorwelle einströmen und den Zentrifugalabscheider durch den Auslass verlassen. Durch die Abdichtung des Korbes im oberen Teil in Verbindung mit der Rotorwelle kann das einströmende Fluid nur den Weg über die Teller durch die Hohlwelle strömen. Es existiert keine Möglichkeit, dass ungefiltertes Fluid den Zentrifugalabscheider verlässt. Da die Rotorwelle im oberen Bereich über ein abgedichtetes Lager im Gehäuse gelagert ist, kann das Fluid also auch nicht am Korb vorbei und dann nach außen strömen.

Eine besondere Ausführungsform der Erfindung sieht vor, dass die Mantellinie des tellerförmigen Anteils des Korbes und die der Teller selbst mit der Rotorachse einen Winkel im ungefähren Bereich zwischen 30° und 60° einschließen. Diese Winkelangaben sollen nicht bindend sein, es ist also theoretisch auch möglich, abweichende Winkel zu realisieren. Es hat sich jedoch herausgestellt, dass die gesamte Effizienz des Systems in diesem Bereich am höchsten ist.

Eine vorteilhafte Ausbildung des Erfindungsgedankens besteht darin, dass im Inneren des Korbes Leitelemente angeordnet sind, welche sich in axialer Richtung erstrecken. Bevorzugt beginnen die Leitelemente im Übergangsbereich zwischen tellerförmigem und zylinderförmigem Teil des Korbes und setzen sich bis zum unteren Rand des Korbes fort. Hierbei ist es sinnvoll, wenigstens zwei Leitelelemente anzuordnen, um die Strömung gezielt zu beeinflussen. Durch die Leitelemente ergibt sich eine bessere Rotation des einströmenden Fluides, welches wiederum zu einem besseren Abscheideverhalten führt.

Vorzugsweise sind wenigstens zwei Leitelemente gleichmäßig über den Umfang des Korbes verteilt und stehen mit den Tellern an derem äußeren Umfang in Kontakt. Hierdurch wird eine Fixierung und Stabilisierung der Tellerstapel bewirkt, welches zu einer runderen und exakteren Lauf des Rotors inklusive des Korbes und der Teller führt. Ebenso wird der Fluidstrom so strömungstechnisch günstig in die Tellerstapel durch die Leitelemente hineingedrückt, was wiederum zu einer Verbesserung des Abscheidegrades führt.

Gemäß einer weiteren Ausgestaltung der Erfindung weisen der zylinderförmige Teil des Korbes und eine gedachte Verbindungslinie zwischen den äußeren Umfängen der Teller zueinander einen Winkel zwischen 0° und 10° auf. Hierbei ist der Öffnungswinkel in Richtung des Lufteintrittes ausgerichtet. Es hat sich als vorteilhaft erwiesen, diesen Öffnungswinkel zwischen Korb und Tellerpaket mit zu integrieren, da hierdurch das Einströmen des Fluides erleichtert wird und weiterhin auch eine positive Wirkung bezüglich der Gleichmäßigkeit der Strömungseinleitung in die Tellerspalte erzielt wird. Dieser Winkel zwischen 0° und 10° ist jedoch nicht zwingend notwendig, er kann unter bestimmten Umständen auch größer als 10° oder kleiner als 0° werden. Dieses hängt auch von den äußeren Umständen und den zu erzielenden Ergebnissen ab.

Bei dem erfindungsgemäßen Verfahren zur Reinigung eines Fluidstromes, insbesondere eines Kurbelgehäuseentlüftungsgases, wird ein Öl- und/ode r Feststoffpartikel belasteter Fluidstrom durch einen Gemischeinlass in einen Tellerseparator eingeleitet. Der Tellerseparator weist ein Gehäuse, welches den Stator bildet, und einen konzentrisch im Gehäuse angeordneten Rotor auf, wobei am Rotor konzentrisch mehrere Teller angeordnet sind, welche entlang der Rotorachse parallel zueinander und koaxial zur Rotorachse angeordnet sind, wobei der Rotor korrespondierend mit einem Antrieb verbunden ist. Der Antrieb kann hierbei außerhalb des Tellerseparators angeordnet sein und korrespondierend mit der Rotorwelle verbunden sein oder als elektrischer Antrieb in die Rotorwelle integriert sein. Weiterhin ist oberhalb des obersten Tellers ein Korb mit der Rotorwelle verbunden, welcher einen tellerförmigen Anteil und einen zylinderförmigen Anteil aufweist, wobei der Korb ebenso wie die Teller drehfest mit dem Rotor verbunden sind. Der Öl- und/oder Feststoffpartikel belastete Fluidstrom strömt durch den Einlass in einen Spalt zwischen dem untersten Teller und dem zylinderförmigen Teil des Korbes und wird durch die Rotation von Korb und Tellern in Rotation versetzt. Der Rotor rotiert hierbei mit einer Umdrehungszahl, welche ungefähr in einem Bereich zwischen 3.000 und 10.000 1/min liegt. Hiervon abweichende Drehzahlen sind jedoch möglich und können je nach Auslegung des Gesamtsystems erforderlich sein. Hierdurch werden die Öl- und/oder Feststoffpartikel durch die Zentrifugalkraft an den Tellern, die durchströmt werden müssen, oder am inneren Mantel des Korbes abgeschieden und der gereinigte Fluidstrom verlässt den Tellerseparator durch einen Luftauslass. Die abgeschiedenen Öl- und/oder Feststoffpartikelanteile werden durch einen Ölauslass im unteren Bereich des Tellerseparators ausgetragen.

Gemäß einer zweckmäßigen Ausgestaltung des Verfahrens durchströmt der Fluidstrom ein ganzes Tellerpaket, welches wenigstens sechs Teller aufweist, wobei der unterste Teller im Bereich der Rotoranbindung eine geschlossene Oberfläche aufweist und nur am Umfang umströmt wird. Die weiteren Teller weisen im Bereich der Rotoranbindung Durchgangsöffnungen auf, so dass der Fluidstrom teilweise durch diese Öffnungen und teilweise über den Umfang der Teller zum jeweils nächsten Teller strömt. Die Durchgangsöffnungen der Teller - abgesehen vom untersten Teller - dienen hierbei einer besseren und einheitlicheren Fluidströmung, welches die Effizienz der Abscheidung weiter verbessert.

Eine vorteilhafte Ausgestaltung des Verfahrens sieht vor, dass der Fluidstrom nach dem letzten Teller durch Zugangsöffnungen in die Rotorwelle, welche teilweise als Hohlwelle ausgeführt ist, einströmt. Die Zugangsöffnungen in die Rotorwelle sind hierbei unterhalb des tellerförmigen Teils des Korbes angeordnet, wobei der tellerförmige Teil des Korbes dichtend mit der Rotorwelle verbunden ist und keine Durchgangsöffnungen aufweist. Der in der Rotorwelle vorhandene Hohlraum weist im oberen Bereich außerhalb des Separatorgehäuses eine Öffnung auf, durch die das gereinigte Fluid den Tellerseparator verlässt. Durch die Anordnung der Öffnung zwischen dem letzten Teller und vor dem tellerförmigen Teil des Korbes ist gewährleistet, dass der Fluidstrom erst sämtliche Teller passieren bzw. durchströmen muss, um so nahezu sämtliche Öl- und/oder Feststoffpartikel abscheiden zu können.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: einen erfindungsgemäßen Zentrifugalabscheider in einem Längsschnitt, und
- Figur 2: einen Querschnitt durch den zylinderförmigen Teil des Korbes.

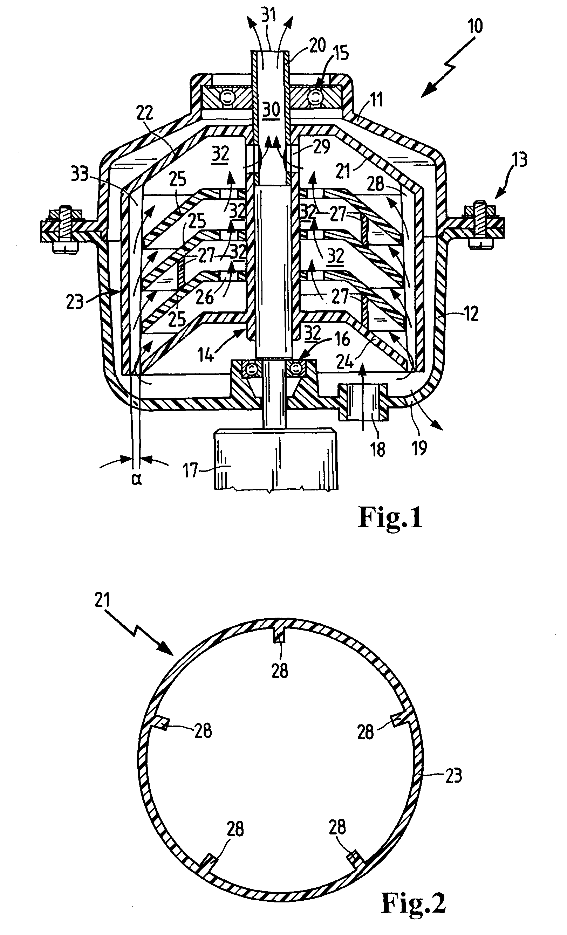

Die Figur 1 zeigt einen Tellerseparator 10 in einem Längsschnitt. Hierbei weist der Tellerseparator 10 ein Gehäuse, bestehend aus Gehäuseoberteil 11 und Gehäuseunterteil 12, welche über eine Schraubverbindung 13 miteinander verbunden sind, auf. Im Gehäuse ist ein Rotor 14 drehbar gelagert, wobei die Lagerung durch ein Radiallager 15 im Gehäuseoberteil 11 und ein Radiallager 16 im Gehäuseunterteil 12 erfolgt. Der Rotor 14 ist mit einem Antrieb 17 verbunden, welcher die Rotationsbewegung des Rotors 14 auslöst. Im Gehäuseunterteil 12 sind ein Fluideinlass 18 und ein Ölauslass 19 angeordnet, wobei der Fluideinlass 18 einen erhöhten Kragen aufweist, um eventuell angesammeltes Öl und/oder Feststoffpartikel nicht durch diesen Fluideinlass 18 abfließen zu lassen. Dahingegen ist der Ölauslass 19 am tiefsten Punkt des Gehäuseunterteils 12 angeordnet. Während in der hier dargestellten Ausführungsform der Fluideinlass 18 achsparallel zum Rotor 14 ausgerichtet ist, kann dieser Fluideinlass 18 bei anderen Ausführungsformen auch geneigt oder quer zum Rotor 14, insbesondere radial zum Rotor 14 oder tangential zum Gehäuse 11/12, angeordnet sein. Der Rotor 14 weist eine Rotorwelle 20, einen Korb 21, welcher einen tellerförmigen Teil 22 und einen zylinderförmigen Teil 23 aufweist, und einen geschlossenen Teller 24 auf. Zwischen dem geschlossenen Teller 24 und dem tellerförmigen Teil 22 des Korbes 21 sind mehrere Teller 25 mit Durchgangsöffnungen 26 angeordnet. Zwischen benachbarten Tellern 25 sind Distanzstücke 27 angeordnet, von denen zur Wahrung der Übersichtlichkeit in Figur 1 jedoch nur einige symbolisch eingezeichnet sind. Diese Distanzstücke 27 sind beispielsweise punkt- oder kugelförmig oder in Form von Stegen ausgebildet. Durch diese Distanzstücke 27 werden die benachbarten Teller 25 in Richtung der Rotorwelle 20 auf Abstand gehalten, wodurch die Spalte zwischen den Tellern 25 definiert werden können. Bei einer bevorzugten Ausführungsform sind diese Distanzstücke 27 einteilig mit den Tellern 25 hergestellt. Beispielsweise weist jeder Teller 25 auf der Oberseite mehrere derartige Distanzstücke 27 auf, die sich in zusammengebautem Zustand an der Unterseite des benachbarten Tellers 25 abstützen. Bei der hier gezeigten Ausführungsform sind die Teller 25 sowie der tellerförmige Teil 22 des Korbes 21 mit der Gestalt einer kegelstumpfförmigen Hülse ausgebildet, so dass die Mantellinie der Teller 25 geneigt gegenüber der Rotorwelle 20 verläuft. Im speziellen Beispiel schließen die Mantellinien der Teller 25 mit der Rotorwelle 20 einen Winkel von etwa 45° ein. Es ist klar, dass auch andere Winkel bis zu 90° möglich sind. Im Inneren des Korbes 21 sind parallel zur Rotorwelle 20 Leitelemente 28 im Korb 21 über den Umfang verteilt angeordnet. Diese Leitelemente 28 beginnen am Ende des auslaufenden Teils des tellerförmigen Teils 22 des Korbes 21 und setzen sich nach unten bis zum Ende des zylinderförmigen Teils 23 des Korbes 21 fort. In dieser Ausführungsform berühren sich die nach Innen liegenden Außenkanten der Leitelemente 28 und die Außenkanten der Teller 25, so dass durch die Leitelemente 28 eine Fixierung und Zentrierung des Korbes 21 zu den Tellern 25 erfolgt. Die Rotorwelle 20 ist oberhalb des letzten Tellers 25 als Hohlwelle ausgeführt, wobei zwischen tellerförmigem Teil 22 des Korbes 21 und dem letzten Teller 25 wenigstens eine Zugangsöffnung 29 in den Hohlraum 30 der Rotorwelle 20 vorgesehen ist. Der Hohlraum 30 ist im weiteren Verlauf mit einem Luftauslass 31 für die gereinigte Luft verbunden. Der Strömungsverlauf der zu reinigenden Luft ist für den dargestellten Tellerseparator 10 demnach wie folgt: Das zu reinigende Fluid strömt durch den Fluideinlass 18 in den Tellerseparator 10 und trifft auf den untersten geschlossenen Teller 24, welcher drehfest mit der Rotorwelle 20 verbunden ist. Der Rotor 14, welcher durch einen Antrieb 17 in Rotation versetzt ist, versetzt das einströmende Fluid ebenfalls in Rotation, wobei das noch Öl und/oder Feststoffpartikel belastete Fluid am äußeren Umfang des geschlossenen Tellers 24 vorbeiströmt und in den zwischen Korb 21 und Tellern 25 gebildeten Korbraum 33 einströmt. In Abhängigkeit der jeweils herrschenden Strömungsgeschwindigkeiten und Druckverhältnisse strömt ein Teil des Fluides weiter am äußeren Umfang der weiteren Teller 25 vorbei und ein weiterer Teil des Fluides strömt in den Spalt zwischen den einzelnen Tellern 25 und erreicht so einen Ringraum 32, welcher sich rotornah im Inneren der jeweiligen Tellerspalte befindet. Hier strömt das Fluid durch die Durchgangsöffnungen 26 in den Tellern 25, um dann durch die Zugangsöffnung 29 in den Hohlraum 30 der Rotorwelle 20 zu strömen und diese dann durch den Luftauslass 31 gereinigt zu verlassen. Durch die im Korb 21 angeordneten Leitelemente 28 und die Teller 24, 25 wird das Fluid bei einer entsprechenden Drehzahl des Rotors 14 in eine starke Rotation versetzt. Hierdurch scheiden sich beim Durchströmen des Tellerpaketes bzw. beim Vorbeiströmen an den Tellern 24, 25 die Öl- und/oder Feststoffpartikel an den Tellern 24, 25 oder am Korb 21 bedingt durch die auf sie wirkende Zentrifugalkraft ab, wobei sie sich durch ihre Kohäsionskraft aneinanderbinden und sich anschließend durch ihre Schwerkraft am Boden des unteren Gehäuseteils 12 sammeln, um dann durch den Ölauslass 19 ausgetragen werden zu können. Vorzugsweise weist der zylinderförmige Teil 23 des Korbs 21 gegenüber einer gedachten Verlängerungslinie der Verbindung der Enden der Teller 24, 25 zueinander einen Winkel α von ungefähr 0° bis 10° auf. Dieses dient primär der Verbesserung des Strömungsverlaufes innerhalb des Korbes 21. Um sicherzustellen, dass kein ungereinigtes Fluid den Tellerseparator 10 durch eine äußere Umströmung des Korbes 21 durch das obere Gehäuseteil 11 verlässt, dient das Radiallager 15 in diesem Fall auch gleichzeitig zur Abdichtung gegenüber der Umgebung des Tellerseparators 10.

Die Figur 2 zeigt einen Querschnitt durch den zylinderförmigen Teil 23 des Korbes 21 ohne die restlichen Teile des Tellerseparators 10. Der Figur 1 entsprechende Bauteile sind mit den gleichen Bezugszeichen versehen. In der Figur 2 ist deutlich die Anordnung der Leitelemente 28 über den Umfang des zylinderförmigen Teils 23 vom Korb 21 zu erkennen. Die Leitelemente 28 sind einstückig mit dem Korb 21 gefertigt und weisen bevorzugt alle dieselbe Geometrie auf. Durch die gleichmäßige Verteilung der Leitelemente 28 über den Umfang des zylinderförmigen Teils 23 des Korbes 21 wird eine gute Zentrierung des Korbes 21 gegenüber den Tellern 24, 25 gewährleistet.

## Patentansprüche

1. Zentrifugalabscheider zur Abscheidung von in einem Luftstrom mitgeführten Öl-und/oder Feststoffpartikeln, insbesondere zur Entölung von Kurbelgehäusegasen einer Brennkraftmaschine, wobei der Zentrifugalabscheider als Tellerseparator ausgeführt ist, mit einem Gemischeinlass für die Öl- und/oder Feststoffpartikel behaftete Luft, einem Luftauslass für Reinluft und einem Ölauslass für Öl und/oder Feststoffpartikel, mit einem als Gehäuse ausgebildeten Stator, in dem ein Rotor angeordnet ist, der mehrere Teller aufweist, die entlang der Rotorachse parallel zueinander und koaxial zur Rotorachse angeordnet sind, wobei der Rotor korrespondierend mit einem Antrieb verbunden ist, **dadurch gekennzeichnet, dass** über dem obersten Teller ein Korb mit dem Rotor drehfest verbunden ist, wobei der Korb einen tellerförmigen Teil, welcher koaxial zur Rotorachse und im wesentlichen parallel zu den Tellern angeordnet ist und einen im wesentlichen zylinderförmigen Teil, welcher sich in Richtung der weiteren Teller erstreckt und im wesentlichen parallel zum Stator verläuft, aufweist.

2. Zentrifugalabscheider nach Anspruch 1, **dadurch gekennzeichnet, dass** der tellerförmige Teil des Korbes einen größeren Umfang als der Umfang der Teller hat und der zylinderförmige Teil des Korbes sich in axialer Richtung wenigstens über einen Teller erstreckt und diesen dabei überdeckt.

3. Zentrifugalabscheider nach Anspruch 2, **dadurch gekennzeichnet, dass** sich sämtliche Teller im Inneren des Korbes befinden und so ein Raum ausgebildet ist, welcher die Teller umgibt und außen vom inneren Umfang des zylinderförmigen Teils des Korbes begrenzt ist.

4. Zentrifugalabscheider nach Anspruch 3, **dadurch gekennzeichnet, dass** jeweils zwischen zwei benachbarten Tellern ein Spalt ausgebildet ist, der einen im Inneren des Rotors ausgebildeten Ringraum mit dem Raum zwischen Tellern und Korb verbindet.

5. Zentrifugalabscheider nach einem der vorhergehenden Ansprüche, **dadurch gekennzeichnet, dass** die Teller einen Tellerblock bilden, bei dem benachbarte Teller aneinander befestigt sind und durch Distanzelemente einen definierten Abstand zueinander behalten, wobei der Tellerblock über seine axialen Enden mit einer zentralen Rotorwelle des Rotors drehfest verbunden ist.

6. Zentrifugalabscheider nach einem der vorhergehenden Ansprüche, **dadurch gekennzeichnet, dass** in den Tellern, abgesehen vom in Strömungsrichtung ersten Teller, im Bereich ihrer Verbindungsstelle mit der Rotorwelle Durchgangsöffnungen für den Fluidstrom angeordnet sind.

7. Zentrifugalabscheider nach einem der vorhergehenden Ansprüche, **dadurch gekennzeichnet, dass** der tellerförmige Anteil des Korbes mit der Rotorwelle dichtend abschliesst und die Rotorwelle teilweise als Hohlwelle ausgeführt ist und zwischen dem letzten Teller und dem Korb Öffnungen aufweist, die den im Inneren des Rotors ausgebildeten Ringraum mit dem Hohlraum in der Rotorwelle verbindet, wobei der Hohlraum der Rotorwelle mit dem Luftauslass verbunden ist.

8. Zentrifugalabscheider nach einem der vorhergehenden Ansprüche, **dadurch gekennzeichnet, dass** die Mantellinie des tellerförmigen Anteils des Korbes und der Mantellinie der Teller selbst mit der Rotorachse einen Winkel im ungefähren Bereich zwischen 30° und 60° einschließen.

9. Zentrifugalabscheider nach einem der vorhergehenden Ansprüche, **dadurch gekennzeichnet, dass** im Inneren des Korbes Leitelemente angeordnet sind, welche sich in axialer Richtung erstrecken.

10. Zentrifugalabscheider nach Anspruch 9, **dadurch gekennzeichnet, dass** die Leitelemente über den Umfang des Korbes verteilt sind und mit den Tellern an deren äußerem Umfang in Kontakt stehen.

11. Zentrifugalabscheider nach einem der vorhergehenden Ansprüche, **dadurch gekennzeichnet, dass** der zylinderförmige Teil des Korbes und eine gedachte Verbindungslinie zwischen den äußeren Umfängen der Teller zueinander einen Winkel zwischen 0° und 10° aufweisen, wobei der Öffnungswinkel zum Lufteintritt hin öffnet.

12. Verfahren zur Reinigung eines Fluidstromes, insbesondere eines Kurbelgehäuseentlüftungsgases, wobei ein Öl- und/oder Feststoffpartikel belasteter Fluidstrom durch einen Gemischeinlass in einen Tellerseparator, aufweisend ein Gehäuse welches den Stator bildet und einen konzentrisch im Gehäuse angeordnetem Rotor, eingeleitet wird, wobei der Rotor mehrere Teller aufweist, die entlang der Rotorachse parallel zueinander und koaxial zur Rotorachse angeordnet sind, wobei der Rotor korrespondierend mit einem Antrieb verbunden ist, **dadurch gekennzeichnet, dass** der Fluidstrom einen Spalt zwischen dem untersten Teller und einem den Teller überdeckenden Korb, welcher einen tellerförmigen Anteil und einen zylinderförmigen Anteil aufweist, passiert, wobei auf den ersten Teller weitere Teller folgen bis zum tellerförmigen Teil des Korbes und wobei der Fluidstrom durch die Rotation der Teller und des Korbes die drehfest mit dem Rotor verbunden sind in Rotation versetzt wird, wobei hierdurch die Öl- und/oder Feststoffpartikel durch die Zentrifugalkraft an den Tellern und/oder am Korb abgeschieden werden und der gereinigte Fluidstrom den Tellerseparator durch einen Luftauslass verlässt und die abgeschiedenen Öl- und/oder Feststoffpartikelanteile durch einen Ölauslass ausgetragen werden.

13. Verfahren zur Reinigung eines Fluidstromes nach Anspruch 12, **dadurch gekennzeichnet, dass** der Fluidstrom ein ganzes Tellerpaket, aufweisend wenigstens 6 Teller durchströmt, wobei der unterste Teller im Bereich der Rotoranbindung verschlossen ist und am Umfang umströmt wird und die weiteren Teller im Bereich der Rotoranbindung Durchgangsöffnungen aufweisen und der Fluidstrom so teilweise durch diese Öffnungen und teilweise über den Umfang zum jeweils nächsten Teller strömt.

14. Verfahren nach einem der Ansprüche 12 bis 13, **dadurch gekennzeichnet, dass** der Fluidstrom nach dem letzten Teller durch Zugangsöffnungen in die Rotorwelle, welche teilweise als Hohlwelle ausgeführt ist, einströmt und durch den Luftauslass, welcher durch das Ende der Rotorwelle gebildet ist, gereinigt den Tellerseparator verlässt.
